# EUROPEAN PATENT APPLICATION

(11) **EP 1 850 253 A1**
(43) Date of publication of application: **31.10.2007**
(21) Application number: 06006811.1
(22) Date of filing: 31.03.2006
(51) Int. Cl.: G06F 21/00, H04L 29/06

(54) **Method for mitigating a DoS attack**

(71) Applicant: NOKIA SIEMENS NETWORKS GMBH & CO. KG, 81541 München (DE)
(72) Inventor: Ribeiro, Alexandre, Alverca 2615-063 (PT)
(74) Representative: Fischer, Michael

(57) **Abstract**

A method for mitigating a Dos attack in a network is proposed, whereby
- a network element (clA) affected by the attack sends a notice of attack to a second network element (rA),
- the second network element transmits an ACL, said ACL containing instructions denying traffic from the source of the DoS to the the affected network element, to a further network element (rB, rC),
- the instructions of the ACL are implemented at the further network element,
- the further network element lies logically closer to the source of the DoS (clB, clC, clD) than the second network element.

## Description

A method for mitigating a DoS (Denial of Service) attack along with a network suitable for carrying out the method is described.

A DoS attack is done with the intent of breaking down a network or a server by flooding it with useless traffic. A DoS attack can be launched from a large number of compromised workstations in a synchronized fashion, so that every single workstation sends useless traffic to the same target. When the target is flooded with this traffic, it usually cannot handle it because the link connecting it to the internet becomes overloaded. This means that legitimate requests have a much higher chance of being dropped, since the server or link is fully overloaded.

One objective to be achieved lies in providing a method for mitigating DoS attacks. Another objective to be achieved lies in providing a network suited to mitigating DoS attacks.

A method for mitigating a DoS attack in a network is presented, whereby
- a network element affected by the attack sends a notice of attack to a second network element,
- the second network element transmits an ACL, said ACL containing instructions denying traffic from the source of the DoS to the the affected network element, to a further network element,
- the instructions of the ACL are implemented at the further network element,
- the further network element lies logically closer to the source of the DoS than the second network element.

The ACL (Access Control List) is an example of a preferably used filter that provides instructions to a network element to deny traffic from a source with a certain destination. Other filters readable by network elements containing instructions to permit or deny transmittal of network traffic may however also be used.

The notice of attack preferably contains at least the identity of the affected network element. The identity may comprise an IP address.

According to a preferred variation of the method, the further network element is a network element nearest to the source of the DoS attack. This nearest network element may be a part of the ISP's network to which the affected network element belongs or it may be a network element belonging to another network.

With this method, it becomes possible for an ISP (Internet Service Provider) to place merely basic hardware on its client's network elements that, for example, automatically inform their NMSs or neighbouring network elements of the attacks taking place. DoS attack detection equipment installed on a client's premises will be less expensive compared to hardware placed on the ISP's internet backbone since the hardware on the client side need analyse only a fraction of the traffic that passes through the ISP's internet backbone.

In the case that the further network element nearest to the source of the DoS attack belongs to a network different from that to which the affected network element belongs, the second network element communicates with the nearest relevant network element, i.e. a network element which is closer to the source of the attack. The location of the relevant nearest network element is done via the routing tables of the second network element. The implementation of the instructions can be carried out at any network element, provided the network element supports the proprietary protocol that will be needed.

The method is facilitated by the second network element and/or the further network element comprising a router. Routers have the advantage that they are more likely to comprise hardware useful for processing the ACL messages. Routers also have the advantage that they are set up to know the position of routers belonging at least to the ISP domain to which they belong.

The further network element may also comprise a network interface such as a port.

According to one realisation of the method, the second network element is linked to an NMS (Network Management System). This has the advantage that the NMS can retrieve the notice of attack from the affected network element and can construct an ACL, which it then transmits through the second network element. As the NMS will have a comprehensive overview of network topology, it can apply the ACLs to routers along the shortest path down to at least the border or border network element of the ISP domain to which it belongs.

The NMS can construct the ACL based on the content of the notice of attack from the affected network element together with further details regarding the source of the attack to which the NMS has access.

According to another possible realisation of the method, the notice of attack itself may comprise an ACL with instructions to deny traffic from the source of the DoS to the affected network element. In this case, the ACL may be transmitted from the affected network element directly to a router, the router being the second network element, for example. The second network element then passes on the ACL to the further network element. The handling of the ACLs by the router is preferably facilitated by a protocol that enables recognition of ACL data packet transmissions. In particular, the protocol may be a negotiation and routing protocol.

The ACL thus originating directly from an affected network element preferably contains information relating to the source and destination of the DoS attack network traffic, so that individual clients of an ISP using an affected network element are given the possibility of enabling their individual filters on the ISP's network to which they belong, With this method, calling in the work of an NMS can be avoided, thereby saving resources and accelerating the method for mitigating the DoS attack.

In a preferred realisation of the method, the second network element divides the ACL into a plurality of ACLs each with a different further network element as their respective destination. Thus, the network elements arranged in the path leading from the source of a DoS attack to the affected network element will receive instructions to deny traffic only from that particular source. Network elements arranged in another path leading to the affected network element, such as one stemming from a different DoS source, will receive another ACL divided out of the original. The division is made dependent on the instructions contained in the ACL. It is noted that for every network element affected by a DoS attack, there may be a large plurality of sources for the DoS attack.

Along with the method for mitigating a DoS attack in a network, a network is proposed, comprising:
- a network element with means for constructing and transmitting an ACL,
- a further network element comprising means for implementing the instructions of the ACL, wherein
- the network elements further comprise means for communicating the ACLs to each other based on the mechanisms used by a routing protocol.

One mechanism used by a routing protocol would for example be an LSA, a Link-State Advertisement providing a description of a router's local routing topology that the router distributes to other routers.

Here, the network element with means for constructing and transmitting an ACL can be considered to be the affected network element and/or the second network element named as such for the method.

In particular, the means for implementing the instructions of the ACL include hardware specifically designed to process an ACL.

With the following examples and drawing, the described methods and network are further elaborated upon, whereby:

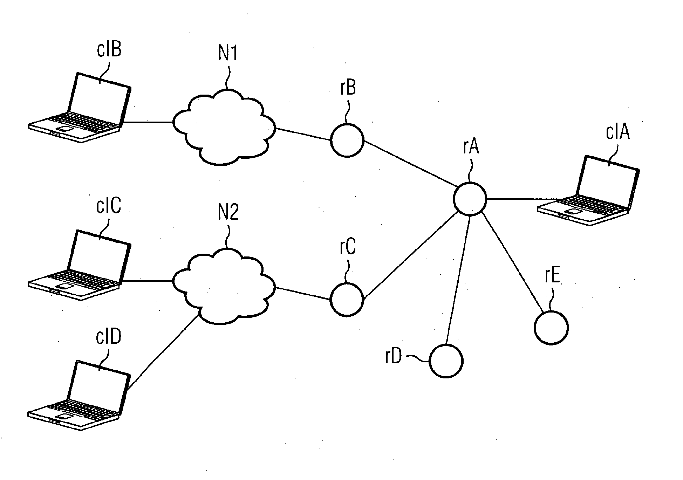

- Drawing 1: shows a network suitable for carrying out a method for mitigating a DoS attack.

Drawing 1 shows a network comprising a plurality of routers rA to rE belonging to an ISP ISPa and clients connected to the said routers, either directly or indirectly. Client c1A is a client of ISPa and is linked to a nearest router rA, whereas client c1B is linked only indirectly to router rB and clients c1C and c1D are both linked only indirectly to router rC. The indirect links are via networks N1 and N2.

The clients c1B to c1D may, for example, be clients of another ISP or members of a plurality of ISPs.

Each client c1A to c1D can be considered to comprise a network element such as a server.

Denying traffic from a DoS attack source, such from clients c1B, c1C and c1D, may begin with an NMS of the ISP ISPa being informed of a DoS attack underway on a server of its client clA. The affected client c1A can inform the NMS of ISPa of the attack by means of a third party tool or application to communicate with ISPA's NMS. Such a third party tool may take the form of a DoS detection system or a system detecting data flow anomalies.

Since the detection of the DoS attack lies within the responsibility of the ISP's client, the filters or ACLs built by the ISP's NMS upon receiving information about a DoS attack are related to the IP addresses of its clients raising the alarm, in this case client c1A, and not to other IP addresses.

The NMS then downloads the DoS attack details from the source that was providing them, in this case client c1A. The download is preferably achieved by a third party tool or by an operator.

For example, the DoS attack details from the client c1A could state that traffic from the IP addresses of the sources C1B to c1C was causing the attack on a port X of its server. Although Drawing 1 only shows sources c1B, c1C and c1D, it is possible that thousands of different IP addresses could be sources for the DoS attack.

Upon downloading the information from the client c1A relating to the sources of the DoS attack, client c1A's provider's NMS builds an ACL that permits all the internet traffic with the exception of the traffic coming from the sources of the DoS attack to pass through to the client c1A.

Next, the NMS applies the newly constructed ACL to the port that is closest to the traffic of the DoS attack. Referring again to drawing 1, the closest ports to the origin of the DoS attacks would be the ports of routers rB and rC. Although network elements on the side of the networks N1 and N2 would be closer, a routing table may only contain information relating to a next logical network element, such as a so-called "hop", meaning that the full path from one network element to another may not always be defined. Thus, the communication of the ACL is preferably done hop by hop.

Where an ISP runs IGP (Interior Gateway Protocol), for example IS-IS (Intermediate System to Intermediate System) or OSPF (Open Shortest Path First) inside its autonomous system, the application of the newly constructed ACL to the said ports is easily accomplished. IS-IS is an IGP used within an administrative domain or network, also known as an Autonomous System (AS), and generally not for routing between networks or administrative domains, a job which could be undertaken instead by an EGP (Exterior Gateway Protocol). Specifically, IS-IS is used by network elements such as routers to determine the best way to forward datagrams or packets through a packet-based network in a routing process. When running IGP, every router rA to rE inside the ISP's autonomous system is aware of every other router, as well as how to reach a given IP address. With this information, an NMS can easily download the network topology from only one of its routers rA to rE and calculate the network elements, preferably ports, to which the ACLs should be applied. The NMS thus spreads the filters (ACLS) by the various routers. The order in which this is done is preferably set by the arrangement of network elements that are on the shortest path to the sources of the DoS attack.

Since the link connecting an ISP to one of its clients might be overloaded due to a DoS attack, an outband link to the router can be used to inform the ISP's NMS of the attack. An outband link, also known as an out-of-band link, is a link that does not use the bandwidth of the primary link. It may be a fibre employed merely for this purpose or it may be a connection via a dial-up modem in such a manner that the router has a port which has a modem attached to it, for example.

The method is easily implemented since the links connecting an ISP to the Internet are often capable of carrying a much larger bandwidth than the links connecting its clients to the ISP's network. Since the links of the ISP to the internet have a much higher bandwidth, it's likely that a DoS attack that affects an ISP's client with a link of lower bandwidth would not affect the ISP itself.

Furthermore, with this method, an ISP can offer its clients cheaper DoS attack detection tools and equipment that inform their NMSs that an attack is taking place.

Apart from having the NMS analyse the network and spreading ACL filters by various routers to origins of DoS attacks, a method for transmitting the ACLs between the various network elements without the help of an NMS is proposed. In particular, a protocol enabling transmittal of ACLs between different network elements, in particular routers, is proposed.

Referring again to Drawing 1, router rA of ISPa is informed by a router of one of its clients c1A that it wished to propagate an ACL regarding the client's autonomous system networks, due, for example, to the detection of a DoS attack, whereby it is noted that ISP clients usually have their own autonomous system created by the ISP, which divides a larger network into several smaller networks in a process called subnetworking. Since the content of the ACL would be the responsibility of the ISP's client, the ACL being propagated can be related to the IP address(es) of the client c1A and not to other IP addresses. In this case the ACL(s) being propagated could contain instructions to block traffic that is directed towards the IP address(es) corresponding to client clA.

After this, router rA propagates the ACL to all the routers that are in the path of any of the IP addresses mentioned in the ACL.

It is also possible for the router rA to subdivide the ACL, so that only the relevant instructions of the ACL are transmitted to the appropriate routers and implemented there. For example, when a router detects that it is directly connected to one of the networks mentioned in the ACL, it applies the ACL to the corresponding port receiving the traffic from that network.

The protocol enabling subdivision of the ACLs could function according to the following manner: referring to Drawing 1, an ACL contains instructions denying traffic coming from clients c1B and c1C. According to the routing table known to the router rA, the next hop for c1B could be an IP address IPb and for c1C the next hop could be an IP address IPc, whereby a hop is considered to be the next network element directly connected, in this case, to rA. Thus, the router rA can subsequently divide the ACL into two ACLs, and send the instructions for c1B only to the IPb network element, and the instructions for c1C only to the IPc network element.

A protocol based on the above method has the effect of pushing the ACL rules closer to the source of a DoS attack, in an automated fashion, so that DoS attacks can be quickly resolved and network resources optimised due to the traffic being dropped before it is routed throughout the network.

The method making use of network elements such as routers spreading the ACL(s) is extendable to the whole internet. For example, when a workstation begins a DoS attack, the attack would sooner or later be blocked at the very same port the workstation is connected to. Although it may not be the same physical port of the workstation, it may very likely lie within the same L3 network.

It is proposed also to clear the ACL rules as soon as they are no longer needed, that is, as soon as a detected DoS attack has ceased. In the case where an NMS is used to spread the ACLs, the clearing of the ACL rules can be done manually by analysing traffic reaching the ISP's router's ports.

The clearing process can however be automated in the router protocol version of the method. If, for example, for a given amount of time no traffic pertaining to a rule in an ACL is applied to a network element, that rule is disabled at that network element and the modified ACL is propagated backwards, to the router from where it came. This inverse process takes place until the initial router has been reached.

### List of Abbreviations:

- N1: first network
- N2: second network
- c1A: client under DoS attack
- c1B: first source of a DoS attack
- c1C: second source of a DoS attack
- c1D: third source of a DoS attack
- rA: first router of an ISP ISPa, closest to c1A
- rB: second router of ISPa
- rC: third router of ISPa
- rD: fourth router of ISPa
- rE: fifth router of ISPa

## Claims

1. Method for mitigating a DoS attack in a network, whereby
- a network element (clA) affected by the attack sends a notice of attack to a second network element (rA),
- the second network element transmits an ACL, said ACL containing instructions denying traffic from the source of the DoS to the the affected network element, to a further network element (rB, rC),
- the instructions of the ACL are implemented at the further network element,
- the further network element lies logically closer to the source of the DoS (c1B, c1C, c1D) than the second network element.

2. Method according to claim 1, whereby the further network element (rB, rC) is a network element closest to the source (c1B, c1C, c1D) of the DoS attack.

3. Method according to one of the claims 1 or 2, whereby the second network element (rA) comprises a router.

4. Method according to one of the preceding claims, whereby the further network element (rB, rC) comprises a router.

5. Method according to one of the preceding claims, whereby the further network element (rB, rC) comprises a network interface.

6. Method according to claim 5, whereby the network interface is a port.

7. Method according to one of the preceding claims, whereby the second network element (rA) is linked to a network management system.

8. Method according to claim 7, whereby the network management system constructs the ACL based on the content of the notice of attack and on further details regarding the source of the attack (c1B, c1C, c1D) to which the network management system has access.

9. Method according to one of the claims 1 to 7, whereby the notice of attack itself comprises an ACL with instructions denying traffic from the source of the DoS (c1B, c1C, c1D) to the affected network element (clA).

10. Method according to one of the preceding claims, whereby the second network element (rA) is a router that transmits the ACL to the further network element using a routing protocol.

11. Method according to one of the preceding claims, whereby the second network element (rA) belongs to the same ISP as the affected network element (clA).

12. Method according to one of the preceding claims, whereby
- the second network element (rA) divides the ACL into a plurality of divisional ACLS,
- the divisional ACLs each contain instructions relevant for only one further network element,
- at least one divisional ACL is sent to the further network element to which the instructions of the divisional ACL pertain.

13. Network, comprising:
- a network element (c1A, rA) with means for constructing and transmitting an ACL,
- a further network element (rB, rC, rD, rE) comprising means for implementing the instructions of the ACL, wherein
- the network elements further comprise means for communicating the ACLs to each other based on a routing protocol.

14. Network according to claim 13, wherein the means for implementing the instructions of the ACL include hardware specifically designed to process an ACL.

15. Network according to one of the claims 13 or 14, wherein the network elements (rA, rB, rC, rD, rE) are routers.

16. Network according to one of the claims 13 to 15, wherein the network element (clA, rA) with means for constructing and transmitting an ACL belongs to a network management system.

17. Network according to one of the claims 13 to 15, wherein the network element (clA, rA) with means for construction and transmitting an ACL belongs to a network client.

18. Network according to one of the claims 13 to 17, wherein the means for constructing and transmitting an ACL further comprise means for detecting a DoS attack.
